Europäisches Patentamt

European Patent Office

Office européen des brevets

(11) Veröffentlichungsnummer: **0 043 098**

**A1**

## (12) EUROPÄISCHE PATENTANMELDUNG

(21) Anmeldenummer: 81104887.5

(51) Int. Cl.³: **A 01 K 5/00**

(22) Anmeldetag: 24.06.81

(30) Priorität: 26.06.80 DE 8016932 U
09.03.81 DE 3108815

(43) Veröffentlichungstag der Anmeldung:
06.01.82 Patentblatt 82/1

(84) Benannte Vertragsstaaten:
BE FR GB NL SE

(71) Anmelder: B. Strautmann & Söhne GmbH & Co.
Bielefelder Strasse
D-4518 Bad Laer 1(DE)

(72) Erfinder: Strautmann, Heinrich
Bielefelder Strasse 41
D-4518 Bad Laer(DE)

(74) Vertreter: Stracke, Alexander, Dipl.-Ing. et al,
Jöllenbecker Strasse 164
D-4800 Bielefeld 1(DE)

(54) Vorrichtung zum Verschieben von Futter-Silageblöcken.

(57) In einem zwischen zwei Reihen von Tier-Boxen (2) verlaufenden Futtergang (1) befinden sich mehrere Futter-Silageblöcke (3) die durch Schlitten (5) mit einer Schubwand (4) verschoben werden können.

Die Schlitten (5) sind jeweils über einen Seil- oder Kettenzug (6) antreibbar.

Die gleichsinnig verschiebbaren Schlitten (5) sind ihren Seil- oder Kettenzügen (6) an eine gemeinsame Antriebswelle (8) angeschlossen, die durch einen Elektromotor (9) antreibbar ist.

Fig.1

-- /---

6 / 1

B. Strautmann & Söhne GmbH & Co., Bielefelder Str.,
4518 Bad Laer

---

"Vorrichtung zum Verschieben von
Futter-Silageblöcken"

- - -

Die vorliegende Erfindung betrifft eine Vorrichtung
zum Verschieben von Futter-Silageblöcken im Futtergang eines Stalles.

Der Erfindung liegt die Aufgabe zugrunde, eine Vorrichtung der eingangs erwähnten Art zu schaffen, die
als stationäre Einrichtung im Futtergang installiert
und mit geringstem Antriebsaufwand betrieben werden
kann.

Diese Aufgabe wird nach der Erfindung gelöst durch
mindestens einen, horizontal verfahrbaren Schlitten
mit einer vertikal verlaufenden Schubwand, wobei der
Schlitten mittels eines unterhalb seiner Aufstandsebene verlaufenden Seil- oder Kettenzuges antreibbar
ist.

Durch Betätigung des Seil- oder Kettenzuges wird der
Schlitten mit seiner vertikal verlaufenden Schubwand
horizontal verfahren und somit ist die Möglichkeit
gegeben, einen oder mehrere Futter-Silageblöcke in
der gleichen Richtung zu verschieben. Der technische

B. Strautmann GmbH & Co.

— 2 —

Aufwand für eine derartige Vorrichtung ist relativ gering und die Antriebsmittel für den Seil- oder Kettenzug können ebenfalls sehr einfach gestaltet sein. So ist es beispielsweise möglich, den Seil- oder Kettenzug motorisch anzutreiben.

Es ist auch denkbar, den Seil-oder Kettenzug von Hand, beispielsweise über eine Kurbel, anzutreiben.

Weitere Merkmale der Erfindung sind Gegenstand von Unteransprüchen und ergeben sich aus der nachfolgenden Beschreibung, der in den Zeichnungen dargestellten Ausführungsbeispiele.
Es zeigen:

Figur 1          eine Draufsicht auf einen Futtergang mit mehreren, darin angeordneten Vorrichtungen zum Verschieben von Futter-Silageblöcken,

Figur 2          eine Ansicht in Richtung des Pfeiles II in Figur 1,

Figur 3          eine der Figur 1 entsprechende Draufsicht nach einem weiteren Ausführungsbeispiel der Erfindung,

Figur 4          einen Teilschnitt nach der Linie IV in Figur 3.

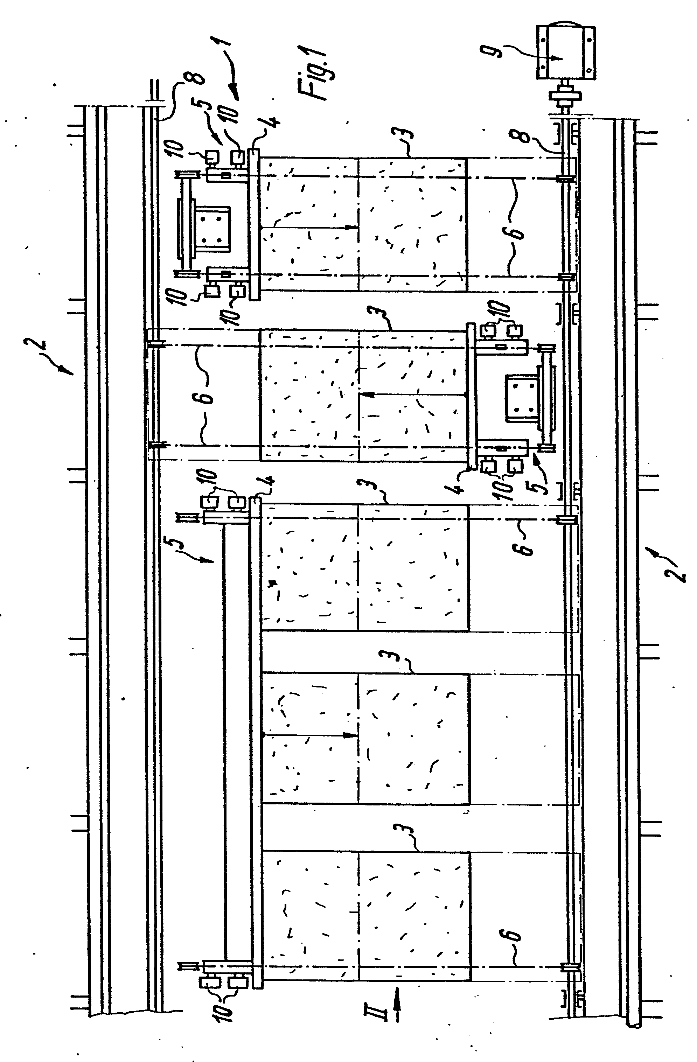

In Figur 1 ist ein Teilbereich eines Futterganges 1 dargestellt, der zwischen zwei gegenüberliegenden Reihen von Tier-Boxen 2 verläuft.

B. Strautmann GmbH & Co.

--3--

Im Futtergang 1 befinden sich mehrere Futter-Silageblöcke 3, wie sie beispielsweise mit einem Silo-Entnahmegerät aus einem Silo ausgeschnitten werden.

Die Futter-Silageblöcke 3 dienen zur Fütterung der in den Tier-Boxen 2 befindlichen Tiere. Da die Tiere die Tier-Boxen 2 nicht verlassen können, ist es erforderlich, die einzelnen Futter-Silageblöcke 3 von Zeit zu Zeit näher an die Tier-Boxen heranzuschieben, was im vorliegenden Falle durch verfahrbare und mit einer Schubwand 4 versehene Schlitten 5 erfolgt. Wie Figur 1 sehr deutlich zeigt, sind die Schlitten 5 auf der rechten Bildseite dazu bestimmt, jeweils nur einen Futter-Silageblock 3 zu verschieben, und zwar gegenläufig, während der auf der linken Bildhälfte gezeigte Schlitten 5 nebst seiner Schubwand 4 so breit ausgeführt ist, daß gleichzeitig drei nebeneinanderstehende Futter-Silageblöcke 3 verschoben werden können.

Die Schlitten 5 sind allesamt horizontal verfahrbar und jeweils über einen Seil- oder Kettenzug 6 antreibbar.

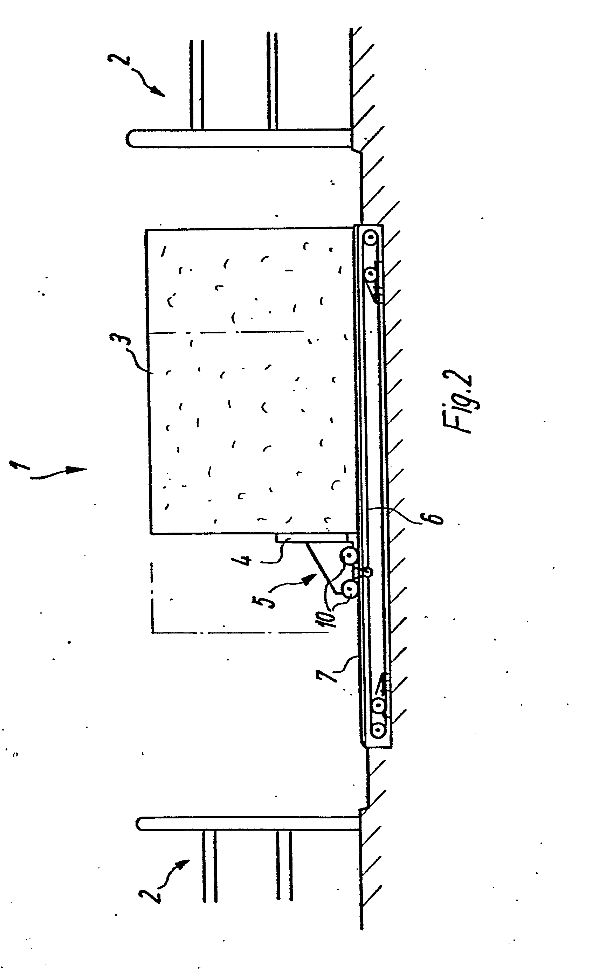

Wie aus Figur 2 sehr deutlich hervorgeht, ist hier der Seil- oder Kettenzug 6 unterhalb der Aufstandsebene 7 der Schlitten 5 angeordnet. Dadurch wird eine Beeinträchtigung des Verschiebevorganges durch das Seil oder die Kette vermieden.

Wie aus Figur 1 hervorgeht, sind die beiden äußeren Schlitten 5 gleichsinnig verfahrbar und für den Antrieb ihrer Seil- oder Kettenzüge 6 ist eine durch-

B. Strautmann GmbH & Co.

- 4 -

gehende Antriebswelle 8 vorgesehen, die quer zur Verschieberichtung der Schlitten 5 verläuft. Als Antriebsmittel dient ein Elektromotor 9, es wäre aber auch denkbar, die Antriebswelle 8 über einen Kurbeltrieb von Hand anzutreiben.

Der mittlere, gegenläufig verschiebbare Schlitten 5 wird über seinen Seil-oder Kettenzug 6 ebenfalls über eine Antriebswelle 8 angetrieben, in Figur 1 ist auf die Darstellung eines Elektromotors für diese besagte Antriebswelle 8 verzichtet.

Wie insbesondere aus Figur 2 sehr deutlich hervorgeht, sind die vertikal an den Schlitten 5 angeschlossenen Schubwände 4 sehr nahe an die Aufstandsebene 7 der Schlitten 5 herangezogen, so daß sich beim Verschieben der Futter- Silageblöcke 3 ein im unteren Bereich derselben liegender Kraftangriffspunkt ergibt, wodurch ein Kippen der Futter-Silageblöcke 3 vermieden wird.

Die Schlitten 5 sind mit Laufrollen 10 ausgestattet, um auf diese Art und Weise ein leichte und möglichst reibungsfreie Bewegung der Schlitten 5 zu erzielen.

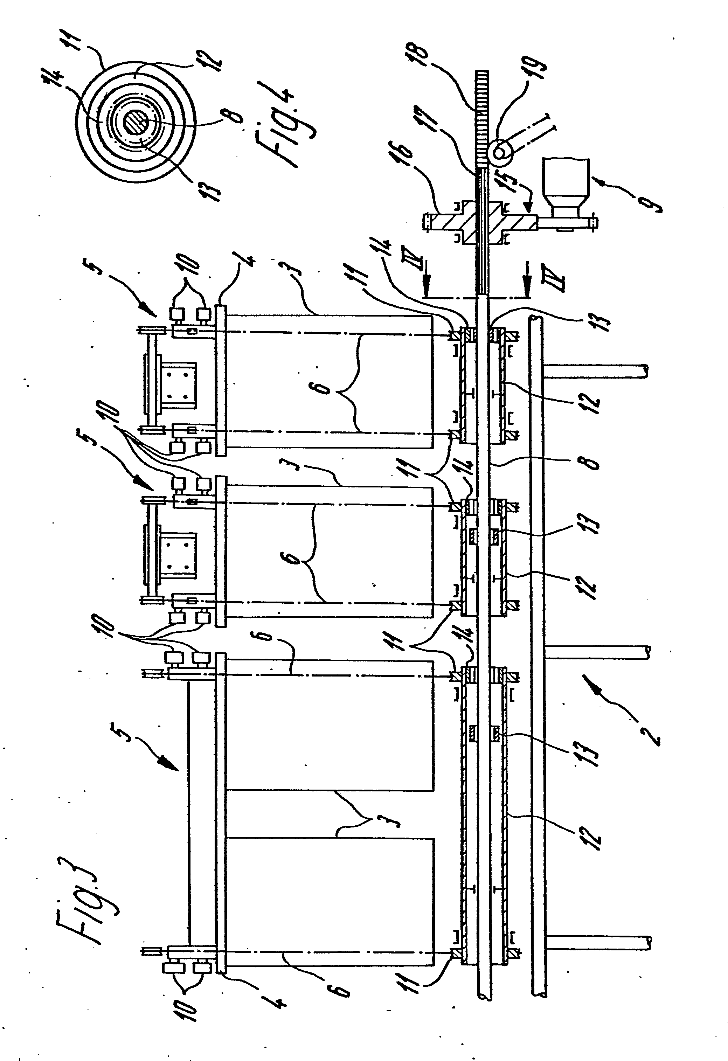

Das in den Figuren 3 und 4 dargestellte Ausführungsbeispiel unterscheidet sich vom Ausführungsbeispiel nach den Figuren 1 und 2 dadurch, daß die Seil- oder Kettenzüge 6 der einzelnen Schlitten 5 trotz des Verhandenseins nur einer Antriebswelle 8 einzeln antreibbar sind.

Dies wird auf folgende Art und Weise erreicht:

B. Strautmann GmbH & Co.

- 5 -

Die Antriebsräder 11 der einzelnen Seil- oder Kettenzüge 6 sind jeweils fest auf einer rohrartigen Achse 12 befestigt. Jedem Seil- oder Kettenzug 6 eines Schlittens 5 ist eine separate Achse 12 zugeordnet. Die Antreibswelle 8 durchtritt sämtliche rohrartigen Achsen 12. Auf der Antreibswelle 8 sind Zahnräder 13 befestigt, die mit innenverzahnten Zahnrädern 14, die innerhalb der Achsen 12 befestigt sind, in Eingriff gebracht werden können. Der Abstand der Zahnräder 13 auf der Antriebswelle 8 zueinander ist so gewählt, daß jeweils immer nur ein Zahnrad 13 mit einem innenverzahnten Zahnrad 14 in Eingriff gebracht werden kann. Die Antriebswelle 8 ist axial verschiebbar und durch vom Elektromotor 9 angetriebenes Getriebe 15 antreibbar. Die Antriebswelle 8 durchtritt ein Getrieberad 16 und ist in diesem Bereich am Umfang mit einer Verzahnung 17 ausgestattet, die mit einer entsprechenden Innenverzahnung des Getrieberades 16 zusammenwirkt. Das freie Ende der Antreibswelle 8 ist mit einer radialen Verzahnung 18 versehen und durch ein antreibbares Ritzel 19, welches mit dem radial verzahnten Ende in Wirkverbindung steht, kann die Antriebswelle 8 axial verschoben werden. Durch die vorstehend beschriebene Konstruktion ist es möglich, jeweils nur einen Seil- oder Kettenzug 6 anzutreiben, so daß einerseits der Vorteil erreicht wird, daß jeder Futter-Silageblock 3 separat verschoben werden kann und andererseits die benötigte Antriebsleistung herabgesetzt werden kann.

Der Abstand der Zahnräder 13 auf der Antriebswelle 8 zueinander ist mindestens um Zahnradbreite größer als der Abstand, den die innenverzahnten Zahnräder 14 der Achsen 12 zueinander aufweisen.

B. Strautmann GmbH & Co.

- 6 -

Abweichend vom dargestellten Ausführungsbeispiel ist es auch möglich, den Elektromotor 9 nebst Getriebe 15 oder gegebenenfalls in direkter Wirkverbindung mit der Antriebswelle 8 auf einer Grundplatte verschiebbar anzuordnen, um auf diese Art und Weise zu einer Axialverschiebung der Antreibswelle 8 zu kommen.

Ebenso ist es denkbar, die Antriebswelle 8 axial und verschiebbar zu gestalten und auf der Antriebswelle 8 Kupplungen anzubringen, die jeweils einzeln mit den Achsen 12 in Eingriff gebracht werden können.

Es sind weitere konstruktive Lösungen denkbar, durch die der dem Ausführungsbeispiel nach den Figuren 3 und 4 zugrunde liegende Gedanke, nämlich die einzelnen Schlitten 5 jeweils separat mit nur einer Antriebswelle 8 antreiben zu können, verwirklicht werden kann.

B. Strautmann & Söhne
GmbH & Co. KG

– 1 –

P a t e n t a n s p r ü c h e
================================

1. Vorrichtung zum Verschieben von Futter-Silageblöcken im Futtergang eines Stalles, g e k e n n -
   z e i c h n e t   d u r c h   mindestens einen,
   horizontal verfahrbaren Schlitten (5) mit einer
   vertikal verlaufenden Schubwand (4), wobei der
   Schlitten (5) mittels eines unterhalb seiner Aufstanzebene (7) verlaufenden Seil-oder Kettenzuges
   (6) antreibbar ist.

2. Vorrichtung nach Anspruch 1, dadurch gekennzeichnet,
   daß der Seil- oder Kettenzug (6) mittels eines
   Elektromotors (9) antreibbar ist.

3. Vorrichtung nach Anspruch 1, dadurch gekennzeichnet,
   daß der Seil- oder Kettenzug (6) mittels eines
   Kurbeltriebes von Hand antreibbar ist.

4. Vorrichtung, nach einem der vorhergehenden Ansprüche,
   dadurch gekennzeichnet, daß die Seil- oder Kettenzüge (6) mehrerer, gleichsinnig verschiebbarer
   Schlitten (5) über eine gemeinsame, quer zur Verschieberichtung der Schlitten (5) verlaufenden Antriebswelle (8) antreibbar sind.

5. Vorrichtung nach einem der vorhergehenden Ansprüche,
   dadurch gekennzeichnet, daß die Schlitten (5) mit
   Laufrollen (10) ausgestattet sind.

B. Strautmann & Söhne
GmbH & Co. KG.

- 2 -

6. Vorrichtung nach einem der vorhergehenden Ansprüche, dadurch gekennzeichnet, daß die Seil-
oder Kettenzüge (6) mehrerer Schlitten (5) über
eine gemeinsame Antriebswelle (8) unabhängig voneinander antreibbar sind.

7. Vorrichtung nach Anspruch 6, dadurch gekennzeichnet,
daß die Antriebsräder (11) der einzelnen Seil- oder
Kettenzüge (6) jeweils auf rohrartigen Achsen (12)
befestigt sind und das die Antriebswelle (8) mit
Kupplungsteilen versehen ist, die jeweils mit einer
einem Seil- oder Kettenzug (6) zugeordneten Achse
(12) in Eingriff bringbar sind.

8. Vorrichtung nach Anspruch 7, dadurch gekennzeichnet,
daß in den rohrförmigen Achsen (12) jeweils ein
innen verzahntes Zahnrad (14) befestigt ist, von
denen jeweils eines mit einem auf der Antriebswelle
(8) befestigten Zahnrad (13) in Eingriff bringbar ist,
wobei die Antriebswelle (8) axial verschiebbar ist.

9. Vorrichtung nach Anspruch 8, dadurch gekennzeichnet,
daß auf der Antriebswelle (8) soviele Zahnräder (13)
befestigt sind, wie separat antreibbare Seil- oder
Kettenzüge (6) vorhanden sind, wobei die Abstände
der Zahnräder (13) auf der Antriebswelle (8) zueinander mindestens um Zahnradbreite größer sind
als die Abstände der innenverzahnten Zahnräder (14)
der Achsen (12) zueinander.

10. Vorrichtung nach einem der vorhergehenden Ansprüche,
dadurch gekennzeichnet, daß die Antriebswelle (8)
in einem Teilbereich am Umfang eine Verzahnung (17)
aufweist und in diesem Bereich ein innenverzahntes

- 3 -

B. Strautmann & Söhne
GmbH & Co. KG.

- 3 -

Getrieberad (16) eines vom Elektromotor (9) antreibbaren Getriebes (15) durchtritt.

11. Vorrichtung nach Anspruch 10, dadurch gekennzeichnet,
daß das freie Ende der Antriebswelle (8) mit einer
radialen Verzahnung (18) versehen ist, in welche ein
antreibbares Ritzel (19) eingreift.

12. Vorrichtung nach einem der Ansprüche 7 - 10, dadurch
gekennzeichnet, daß die Antriebswelle (8) fest mit
dem Elektromotor (9) oder einem mit dem Elektromotor
(9) in Wirkverbindung stehenden Getriebe (15) ver -
bunden ist, wobei der Elektromotor (9) und / oder
das Getriebe (15) auf einer Grundplatte verschiebbar
angeordnet sind.

Fig.1

Strautmann

0043098

Fig.2

0043098

Strautmann

Fig.3

Fig.4

0043098

## EUROPÄISCHER RECHERCHENBERICHT

Europäisches Patentamt

Nummer der Anmeldung

EP 81 10 4887.5

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| P | DE – U1 – 8 016 891 (B. STRAUTMANN & SÖHNE GMBH U. CO.)<br>* Ansprüche 1, 3, 6, 7; Fig. 1 bis 4 *<br>-- | 1-3 |
| P,A | DE – U1 – 8 021 740 (B. STRAUTMANN & SÖHNE GMBH U. CO.)<br>* Anspruch 1; Fig. 1 *<br>-- | 1 |
| A | DE – A – 2 000 540 (G. NEUMEIER)<br>-- | |
| A | US – A – 3 688 745 (C.J. STEFAN)<br>----- | |

**KLASSIFIKATION DER ANMELDUNG (Int. Cl.³)**

A 01 K 5/00

**RECHERCHIERTE SACHGEBIETE (Int. Cl.³)**

A 01 K 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 10-09-1981 | SCHOFER |

EPA form 1503.1 06.78